# EUROPÄISCHE PATENTSCHRIFT

(11) **EP 0 610 707 B1**
(45) Veröffentlichungstag und Bekanntmachung des Hinweises auf die Patenterteilung: **05.08.1998**
(21) Anmeldenummer: 94100981.3
(22) Anmeldetag: 24.01.1994
(51) Int. Cl.: A47G 25/06, F16B 7/10

(54) **Höheneinstellbare Einrichtung**
Height adjustable apparatus
Dispositif ajustable en hauteur

(30) Priorität: 11.02.1993 DE 4304101
(43) Veröffentlichungstag der Anmeldung: 17.08.1994
(73) Patentinhaber: Umdasch Shop - Concept Gesellschaft m.b.H., 3300 Amstetten (AT)
(72) Erfinder: Pesendorfer, Fritz, A-1232 Wien (AT)
(74) Vertreter: Füchsle, Klaus, Dipl.-Ing.

(56) Entgegenhaltungen:
- EP-A- 0 181 584
- WO-A-90/05470
- DE-U- 8 716 304
- FR-A- 1 156 837
- GB-A- 747 385

## Beschreibung

Die Erfindung betrifft eine höheneinstellbare Einrichtung gemäß dem Oberbegriff des Anspruchs 1.

Höheneinstellbare Einrichtungen dieser Art sind hauptsächlich im Ladenbereich bzw. im Verkaufsbereich von Kleidungsstücken eingesetzt. Jedoch sind auch andere Einsatzgebiete, wie z.B. der Wohnbereich, denkbar.

Aus der EP-0 181 584 ist ein höhenverstellbarer Polygonsäulen-Kleiderpräsentierständer bekannt. Bei diesem ist an einer Standrohranordnung ein teleskopisch bewegliches Auszugsrohr mit einer Höhenverstelleinrichtung vorgesehen, durch welche die relative Höhe der Auszugssäule auf einem Standrohr einstellbar ist. Die Höhenverstelleinrichtung besteht aus einer über das Auszugsrohr verschiebbaren und auf dem oberen Ende des Standrohrs abgestützten Arretiervorrichtung und einer Anzahl längs einem der Wandabschnitte der Auszugssäule aufeinander fluchtend angeordneten Ausnehmungen. Die Arretiervorrichtung mit einer auf dem Auszugsrohr längsverschiebbaren Hülse ist auf dem Auszugsrohr durch ihre Durchlaßöffnung gegen Verdrehung gesichert, auf deren Innenseite ein in die Ausnehmungen einzugreifendes bestimmtes Zapfenglied angeordnet ist. Diesem Zapfenglied gegenüber liegt ein Federelement, das die Hülse auf der Zapfengliedseite an dem Auszugsrohr anpreßt und das Zapfenglied in der Ausnehmung festhält.

Obwohl eine Höhenverstelleinrichtung dieser Art eine zuverlässig indexierbare Höhenverstellung des Auszugsrohrs ermöglicht und unter Belastung praktisch nicht betätigbar ist, erfordert der Aufbau der Hülse mehrere bewegliche Teile und läßt keine Einhandbedienung beim Ausziehen der Höhenverstelleinrichtung zu.

Aus dem DE-GM 87 16 304 ist eine weitere Arretiervorrichtung mit einem Klemmelement bekannt, das aus einem Rohrstück besteht, welches mit einer inneren elastischen Beschichtung ausgestattet ist. Bei einem ersten Ausführungsbeispiel besteht das Rohrstück aus einem schrägen Rohrabschnitt, dessen Symmetrieachse koaxial zu der Symmetrieachse eines Standrohrs liegt. In unbelastetem Zustand besitzt die innere elastische Beschichtung eine konstante Dicke. Zur Klemmung wird eine Muffe bzw. ein Außenrohr in Anlage mit der oberen Stirnfläche des Klemmelements gebracht wodurch dieses verkantet und durch Verformung der inneren, elastischen Beschichtung verklemmt. Bei einem zweiten Ausführungsbeispiel besteht das Klemmelement aus einem geraden Rohrabschnitt und einer inneren elastischen Beschichtung, die in unbelastetem Zustand eine unterschiedliche Dicke hat, so daß deren Symmetrieachse koaxial mit der des inneren Rohres liegt. Bei Anlage der Muffe bzw. des Außenrohrs an die obere Stirnfläche des Klemmelements wird wiederum die elastische Beschichtung verformt und dadurch eine Klemmung erreicht. Bei dieser bekannten Arretiervorrichtung muß die Innenbeschichtung verformbar sein, um eine axiale Verschiebung und eine Arretierung zu ermöglichen.

Eine gattungsgemäße höheneinstellbare Einrichtung ist aus der WO-A-90/05470 bekannt. Die hierin offenbarte höheneinstellbare Einrichtung weist ein Arretierelement auf, bei dem ein im Querschnitt quadratisches Teleskoprohr relativ zu einem Standrohr verschieblich darin gelagert ist. Das Standrohr weist an seinem oberen Ende eine Schrägfläche auf, auf der in arretiertem Zustand das Arretierelement aufliegt. Das bekannte Arretierelement besteht aus einem das Teleskoprohr umgreifenden Ringdraht mit einem sich nach innen erstreckenden Stiftabschnitt, der im arrtierten Zustand in eines der Langlöcher im Teleskoprohr eingreift. Durch einfaches Anheben des Teleskoprohrs wird der Ringdraht nach oben verschwenkt, wobei er mit seiner einen Seite auf dem oberen Ende des Standrohrs in Anlage bleibt. Beim Hochziehen des Teleskoprohrs verschwenkt sich der Ringdraht soweit, bis der Stiftabschnitt außerhalb des Langlochs zu liegen kommt. Durch leichtes Ablassen des Teleskoprohrs kommt der Stiftabschnitt mit dem nächstliegenden Langloch in Eingriff. Dadurch wird dann das Teleskoprohr in der gewünschten Höhe arretiert.

Für einen Betrachter vermittelt der bei der bekannten hoheneinstellbaren Einrichtung verwendete Ringdraht zum einen ein "billiges" Erscheinungsbild, zum anderen wird ein Betrachter aufgrund der dünnen Ringdrahtlösung möglicherweise die Halterung als instabil ansehen, was sie für die gedachten Verwendungszwecke nicht geeignet erscheinen läßt.

Das der Erfindung zugrundeliegende technische Problem besteht darin, eine höheneinstellbare Einrichtung der genannten Gattung derart weiterzubilden, daß bei Ausbildung einer sich längs des Auszugsrohrs erstreckenden Arretierhülse, mit der ein gefälligeres und stabileres Erscheinungsbild erzielbar ist, beim Ausziehvorhang Einhandbedienung ermöglicht ist.

Dieses technische Problem wird durch eine höheneinstellbare Einrichtung mit den Merkmalen des Anspruchs 1 gelöst.

Mit der erfindungsgemäßen höheneinstellbaren Einrichtung wird ein vollkommen neuartiges Konstruktionskonzept zur Verfügung gestellt, bei der durch die spezielle Formgebung der oberen und unteren Stirnflächen und auch der oberen Stirnfläche des Standrohrs ein Arretieren und Lösen der Arretierhülse ermöglicht wird.

Die vorliegende Erfindung hat die Vorteile, daß sie eine einfache Montage erlaubt, beim Lösen der Fixierung keine mechanische Betätigung nötig ist, sowie eine einfache Bedienung und beim Herausziehen des Auszugsrohrs eine Einhandbedienung ermöglicht. Außerdem ist die Verwendung von kreis-, oval- oder polygonförmigen Querschnittsprofilen des Stand- und Auszugsrohrs wie auch der Arretierhülse möglich.

Dadurch, daß im arretierten Zustand die Arretierhülse die gleiche Querschnittsform wie das Standrohr aufweist und koaxial mit dem Standrohr ausgerichtet ist, wird ein gefälliges Äußeres erzielt.

Vorteilhafterweise ist der Ansatz an der Innenseite der Arretierhülse so ausgebildet, daß sich beim Anheben des Auszugsrohrs die Arretierhülse selbständig durch die Gewichtskraft der Arretierhülse um eine Drehachse dreht und dabei aus der Ausnehmung im Auszugsrohr herausgleitet.

Insbesondere ist es vorteilhaft, daß der Ansatz keil- oder kuppenförmig ausgebildet ist und sich nach unten hin bis zum Innenrand des Standrohrs verjüngt. Hierdurch wird vorteilhafterweise eine ideale Auflauffläche für das Auszugsrohr geschaffen, wodurch beim Ausziehen des Auszugsrohrs der Ansatz automatisch aus der Ausnehmung unter Drehung der Arretierhülse herausgleiten kann.

Damit beim Ausziehen des Auszugsrohrs der Ansatz problemlos aus der Ausnehmung herausgleitet, ist es insbesondere vorteilhaft, daß der zwischen der unteren Stirnfläche der Arretierhülse und der Verjüngung des keil- oder kuppenförmig ausgebildeten Ansatzes eingeschlossene Winkel größer als 90° ist.

Damit im arretierten Zustand die Arretierhülse einwandfrei auf der oberen Stirnfläche des Standrohrs anliegt, ist es vorteilhaft, daß die obere Stirnfläche des Standrohrs und die untere Stirnfläche der Arretierhülse im wesentlichen die gleiche Form aufweisen.

Eine besonders einfache Ausbildung der unteren und oberen Stirnfläche der Arretierhülse wird durch Schrägschnitte erreicht.

Damit die Arretierhülse einwandfrei verschwenkbar ist, so daß der Ansatz aus der Ausnehmung herausgleiten kann, ist es vorteilhaft, daß die obere Mantellinie, die sich durch die obere Stirnfläche auf dem Auszugsrohr ergibt, einen tiefsten Punkt aufweist, der gleich oder um einen gewissen Betrag tiefer liegt als der oberste Punkt der unteren Mantellinie, die sich durch die untere Stirnfläche auf dem Auszugsrohr ergibt.

Die Arretierhülse kann aus jedem geeigneten Material hergestellt werden, jedoch ist es aufgrund der geringen Herstellungskosten besonders vorteilhaft, wenn diese aus Kunststoff oder Guß besteht.

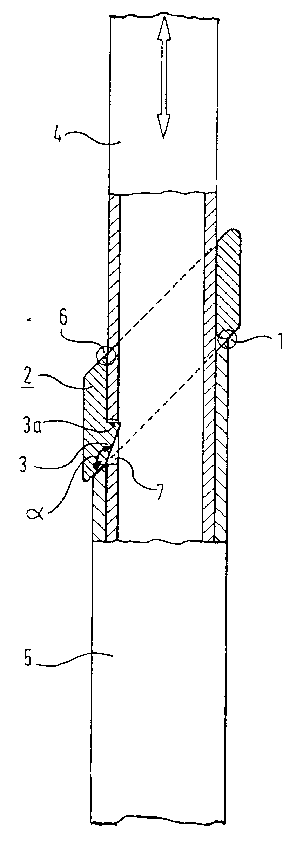

Ein Ausführungsbeispiel der Erfindung ist in der Zeichnung dargestellt und im folgenden näher beschrieben.

Die einzige Figur zeigt ein ortsfestes Standrohr und ein Auszugsrohr mit Arretierhülse, im Längsschnitt.

In einem ortsfesten Standrohr 5 mit einem rechteckigen Innenprofil ist ein Auszugsrohr 4 vertikal verschieblich eingeschoben. Das Auszugsrohr 4 ist auf mindestens einer Seite mit einer oder mehreren Ausnehmungen 7 fluchtend in Vertikalrichtung versehen. Auf dieses Auszugsrohr 4 ist die Arretierhülse 2 aufgeschoben, so daß deren gesamte Innenwandung im arretierten Zustand parallel zu der Außenwandung des Auszugsrohrs 4 verläuft. Im arretierten Zustand liegt die untere Stirnfläche der Arretierhülse 2 auf dem oberen Ende des ortsfesten Standrohrs 5 auf. Das verschiebliche Auszugsrohr 4 liegt dabei mit der oberen Seite einer Ausnehmung 7 auf einer horizontal ausgebildeten Fläche 3a des angeformten Keils oder Kuppe 3 der Arretierhülse 2 kraftschlüssig auf. Der keilförmige Ansatz 3 der Arretierhülse 2 ist am unteren Ende der Innenseite der Arretierhülse 2 gegenüber der Drehachse 1 angeformt, kann jedoch, hier nicht dargestellt, auch auf der Innenseite der Arretierhülse 2 bei der Drehachse 1 über der Drehachse 1 angeformt sein. Der keil- oder kuppenförmige Ansatz 3 verjüngt sich zu der unteren Stirnfläche der Arretierhülse 2 bis zum Innenrand des relativ ortsfesten Standrohrs 5. Dabei bilden die untere Stirnfläche der Arretierhülse 2 und die durch die Verjüngung des keil- oder kuppenförmigen Ansatzes 3 einen Winkel α, der größer ist als 90°. Die Arretierhülse 2 ist auf der oberen Seite durch einen Schrägschnitt begrenzt, der gegenüber der Längsachse des Auszugsrohrs so geführt ist, daß der oberste Punkt 6 im Längsschnitt so zum untersten Punkt 1 der gegenüberliegenden Seite liegt, daß ein Kippen der Arretierhülse 2 möglich ist.

Will man nun den Abstand des höhenverstellbaren Auszugsrohrs 4 zum relativ ortsfesten Standrohr 5 verändern, so ist das höhenverstellbare Auszugsrohr 4 nach oben zu ziehen. Beim Hochziehen des Auszugsrohrs 4 kommt der untere Teil der Ausnehmung 7 gleitend in Kontakt mit dem keil- oder kuppenförmigen Ansatz 3 der Arretierhülse 2. Durch die Keil- oder Kuppenform des Ansatzes 3 wird die Arretierhülse 2 um den Punkt 1 nach außen gedreht. Dabei bewirkt die Gewichtskraft der Arretierhülse 2, daß sich diese nicht mit dem Auszugsrohr 4 nach oben bewegt. Beim Hochziehen des Auszugsrohrs 4 gleitet also der keil- oder kuppenförmige Ansatz 3 der Arretierhülse 2 aus der Ausnehmung 7 des Auszugsrohrs 4. Wird das Auszugsrohr 4 weiter nach oben gezogen, kommt der keil- oder kuppenförmige Ansatz 3 der Arretierhülse 2 mit der nächstfolgenden Ausnehmung 7 des Auszugsrohrs 4 in Eingriff. Der keil- oder kuppenförmige Ansatz 3 rastet in die nächstgelegene Ausnehmung des höhenverstellbaren Auszugsrohrs 4 ein. Das Auszugsrohr 4 ist dann in der Höhe fixiert, da über die waagrechte Fläche des keil- oder kuppenförmigen Ansatzes 3a und der oberen Seite der Ausnehmung 7 des Auszugsrohrs 4 und der unteren Seite der Arretierhülse 2 sowie der oberen Seite des ortsfesten Standrohrs 5 Kraftschluß besteht.

Die Schwerkraft der Arretierhülse 2 und die Formgebung der oberen und unteren Stirnfläche zueinander ermöglichen also, daß sich die Verbindung Arretierhülse 2 und höhenverstellbares Auszugsrohr 4 beim Hochziehen lösen kann. Eine Einhandbedienung beim Hochziehen ist durch diese Merkmale der Arretierhülse 2 gewährleistet. Durch den keil- oder kuppenförmigen Ansatz 3 wird die Einhandbedienung erleichtert.

Zum Absenken des höhenverstellbaren Auszugsrohrs 4 muß zuerst das Auszugsrohr 4 durch Anheben leicht entlastet und dann die Arretierhülse 2 um den Punkt 1 nach oben gedreht werden, so daß der keil- oder kuppenförmige Ansatz 3 aus der Ausnehmung 7 des höhenverstellbaren Auszugsrohrs 4 gleiten kann. Bei Erreichen der gewünschten Arretierungshöhe muß die Arretierhülse 2 einfach losgelassen werden. Der keil- oder kuppenförmige Ansatz 3 rastet dann in die nächstgelegene Ausnehmung 7 des höhenverstellbaren Auszugsrohrs 4 ein.

Durch den kraftschlüssigen Verbund des höhenverstellbaren Auszugsrohrs 4 und dem oberen Ende des relativ ortsfesten Standrohrs 5 über den keil- oder kuppenförmigen Ansatz 3 der Arretierhülse 2 ist eine ungewollte Betätigung der Höhenverstelleinrichtung bzw. der Arretierhülse 3 im belasteten Zustand praktisch unmöglich gemacht. Diese selbstsichernde Konstruktion gegen ungewolltes Lösen im belasteten Zustand des Auszugsrohrs 4 ist eine wichtige Voraussetzung, daß diese Höhenverstelleinrichtung im genannten Ladenbereich einsetzbar ist.

Die obere und untere Stirnfläche der Arretierhülse 2 sowie die obere Stirnfläche des ortsfesten Standrohrs 5 können verschiedenartigst ausgeführt sein. Die oberen und unteren Begrenzungen der Arretierhülse 2 müssen hierbei jedoch eine Drehung um die Achse 1 ermöglichen. Dies kann z.B. durch Schrägschnitte bezüglich der Längsachse des Auszugsrohrs 4, wie z.B. auch durch U-förmige Einschnitte auf zwei gegenüberliegenden Seiten, erreicht werden.

## Patentansprüche

1. Höheneinstellbare Einrichtung, mit
(a) einem Standrohr,
(b) einem Auszugsrohr (4),
(b1) das relativ zum Standrohr (5) verschieblich angeordnet ist und über die obere Stirnfläche des Standrohrs (5) herausragt,
(b2) dessen kreis-, oval- oder polygonförmiges Außenprofil gleich oder ähnlich dem Innenprofil des Standrohrs (5) ist, und
(b3) das auf mindestens einer Seite mit einer oder mehreren Ausnehmungen versehen ist,
**gekennzeichnet** durch
(c) eine das Auszugsrohr (4) ganz oder teilweise umgreifende Arretierhülse (2),
(c1) die einen über ihre Symmetrieachse konstanten lichten Querschnitt im wesentlichen entsprechend dem Außenquerschnitt des Auszugsrohrs (4) besitzt, so daß deren gesamte Innenwandung im arretierten Zustand parallel zu der Außenwandung des Auszugsrohrs (4) verläuft,
(c2) die sich im arretierten Zustand auf dem oberen Ende des Standrohres (5) mit der unteren Stirnfläche abstützt, und die zusammen mit der dem Standrohr (5) zugewandten, unteren Stirnfläche einen obersten Punkt aufweist, durch den eine senkrecht zur Symmetrieachse der Arretierhülse (2) liegende Drehachse (1) definiert wird,
(c3) die mit einem Ansatz (3) versehen ist, der an der der Drehachse (1) gegenüberliegenden unteren Innenseite der Arretierhülse (2) oder an der Seite der Drehachse (1) über der Drehachse (1) auf der Innenseite der Arretierhülse angeformt ist, und
im arretierten Zustand in eine der Ausnehmungen (7) des Auszugsrohrs (4) eingreift, und
(c4) deren obere und unteren Stirnflächen sich durch die Durchdringungskurven von Auszugsrohr (4) und Arretierhülse (2) ergeben, wenn die Arretierhülse (2) um die Drehachse (1) derart um einen Winkel verdreht wird, daß der Ansatz (3) aus der Ausnehmung (7) herausgleiten kann und sich die Arretierhülse (2) längs des Auszugsrohrs verschieben läßt.

2. Höheneinstellbare Einrichtung nach Anspruch 1, dadurch gekennzeichnet, daß,
der Ansatz (3) an der Innenseite der Arretierhülse (2) so ausgebildet ist, daß sich bei Anheben des Auszugsrohrs (4) die Arretierhülse (2) selbständig durch die Gewichtskraft der Arretierhülse (2) um die Drehachse (1) dreht und dabei der Ansatz (3) aus der Ausnehmung (7) im Auszugsrohr (4) herausgleitet.

3. Höheneinstellbare Einrichtung nach Anspruch 1 oder 2, dadurch gekennzeichnet, daß
- der Ansatz (3) eine Auflagefläche (3a) ausgebildet hat, die zur Auflage der oberen Seite einer Ausnehmung (7) im Auszugsrohr (4) dient,
- der Ansatz (3) keil- oder kuppenförmig ausgebildet ist und sich nach unten hin bis zum Innenrand des Standrohrs (5) verjüngt,
- der Winkel, der durch die untere Stirnfläche der Arretierhülse (2) und die Verjüngung des keil- oder kuppenförmig ausgebildeten Ansatzes (3) gebildet wird, größer als 90° ist.

4. Höheneinstellbare Einrichtung nach Anspruch 1, dadurch gekennzeichnet, daß
die obere Stirnfläche des Standrohrs (5) der unteren Stirnfläche der Arretierhülse (3) gleicht oder ähnlich ist.

5. Höheneinstellbare Einrichtung nach Anspruch 1, dadurch gekennzeichnet, daß
die oberen und unteren Stirnflächen der Arretierhülse (2) durch Schrägschnitte geformt sind.

6. Höheneinstellbare Einrichtung nach Anspruch 1, dadurch gekennzeichnet, daß
- die obere Mantellinie, die sich durch die obere Stirnfläche auf dem Auszugsrohr (4) ergibt, einen tiefsten Punkt (6) aufweist, der gleich hoch oder um einen gewissen Betrag tiefer liegt, als der oberste Punkt der unteren Mantellinie, die sich durch die untere Stirnfläche auf dem Auszugsrohr (4) ergibt oder der gleich hoch, oder um einen gewissen Betrag tiefer liegt als die Drehachse (1).

7. Höheneinstellbare Einrichtung nach Anspruch 1, dadurch gekennzeichnet, daß die Arretierhülse (2) aus Kunststoff oder aus Guss ist.

## Claims

1. Vertically-adjustable device, with
(a) a standpipe,
(b) an extending pipe (4),
(b1) which is disposed to be movable relative to the standpipe (5) and projects above the upper end face of the standpipe (5),
(b2) whose circular, oval or polygonic external profile is identical or similar to the internal profile of the standpipe (5), and
b3) which is provided on at least one side with one or a plurality of apertures,
characterised by
(c) a locking sleeve (2) which totally or partly surrounds the extending pipe (4),
(c1) which has a clear cross-section constant across the axis of symmetry corresponding to the external cross-section of the extending tube (4) so that its entire inner wall in the locked condition extends parallel to the outer wall of the extending tube (4),
(c2) which, in the locked condition, is supported on the upper end of the standpipe (5) with the lower end face, and which, together with the lower end face facing the standpipe (5) has an uppermost point, by means of which an axis of rotation (1) is defined, lying vertically to the axis of symmetry of the locking sleeve (2),
(c3) which is provided with a stop means (3), which is integrally formed on the lower inner side, lying opposite the axis of rotation (1), of the locking sleeve (2), or on the side of the axis of rotation (1) above the axis of rotation (1) on the inner side of the locking sleeve, and in the locked condition engages in one of the apertures (7) in the extending pipe (4), and
(c4) whose upper and lower end faces result from the penetration curves of extending pipe (4) and locking sleeve (2), when the locking sleeve (2) is rotated about the axis of rotation (1) through such an angle that the stop means (3) can slide out of the aperture (7) and the locking sleeve (2) is displaced along the extending pipe.

2. Vertically-adjustable device according to claim 1, characterised in that
the stop means (3) is formed on the inner side of the locking sleeve (2) in such a way that when the extending pipe (4) is raised, the locking sleeve (2) rotates automatically due to the gravitational force of the locking sleeve (2) about the axis of rotation (1) and thus the stop means (3) slides out of the aperture (7) in the extending pipe (4).

3. Vertically-adjustable device according to claim 1 or 2, characterised in that
- the stop means (3) is formed with a contact surface (3a), which serves for contact of the upper side of an aperture (7) in the extending pipe (4),
- the stop means (3) is in a wedge or cup-shape, and tapers downward as far as the inner edge of the standpipe (5),
- the angle formed by the lower end face of the locking sleeve (2) and the taper of the wedge or dome-shaped stop means (3) is greater than 90°.

4. Vertically-adjustable device according to claim 1, characterised in that
the upper end face of the standpipe (5) is identical or similar to the lower end face of the locking sleeve (3).

5. Vertically-adjustable device according to claim 1, characterised in that
the upper and lower end faces of the locking sleeve (2) are formed by diagonal cuts.

6. Vertically-adjustable device according to claim 1, characterised in that
- the upper surface line which results from the upper end face on the extending pipe (4), has a lowermost point (6), which lies at an identical height with or to a certain extent lower than the uppermost point of the lower surface line which results from the lower end face on the extending pipe (4), or which is at an identical height, or by a certain extent lower than the axis of rotation (1).

7. Vertically-adjustable device according to claim 1, characterised in that the locking sleeve (2) is made of plastic or casting.

## Revendications

1. Dispositif réglable en hauteur, comprenant
(a) un tube vertical fixe,
(b) un tube extractible (4),
(b1) qui est disposé de manière à pouvoir coulisser relativement par rapport au tube vertical fixe (5) et qui fait saillie au-dessus de la surface frontale supérieure du tube vertical fixe (5),
(b2) dont le profil extérieur de forme circulaire, ovale ou polygonale est identique ou similaire au profil intérieur du tube vertical fixe (5), et
(b3) qui sur au moins un côté est pourvu d'un ou de plusieurs évidements,
**caractérisé** par
(c) une douille de blocage (2), qui entoure totalement ou partiellement le tube extractible (4), et
(c1) qui possède une section transversale intérieure constante le long de son axe de symétrie, et correspondant sensiblement à la section transversale extérieure du tube extractible (4), de sorte que la totalité de sa paroi intérieure s'étend, à l'état bloqué, parallèlement à la paroi extérieure du tube extractible (4),
(c2) qui, à l'état bloqué, s'appuie sur l'extrémité supérieure du tube vertical fixe (5) avec sa surface frontale inférieure, et présente, en commun avec la surface frontale inférieure dirigée vers le tube vertical fixe (5), un point le plus élevé par lequel est défini un axe de rotation (1) orthogonal à l'axe de symétrie de la douille de blocage (2),
(c3) qui est pourvu d'un appendice (3) formé sur le côté intérieur inférieur de la douille de blocage (2), situé du côté opposé à celui où se trouve l'axe de rotation (1), ou bien formé sur le côté de l'axe de rotation (1), au-dessus de cet axe de rotation (1), sur le côté intérieur de la douille de blocage, cet appendice s'engageant, à l'état bloqué, dans l'un des évidements (7) du tube extractible (4), et
(c4) dont les surfaces frontales supérieure et inférieure sont engendrées par les courbes d'intersection du tube extractible (4) et de la douille de blocage (2), lorsque la douille de blocage (2) est tournée autour de l'axe de rotation (1) d'un angle tel, que l'appendice (3) puisse glisser hors de l'évidement (7) et que la douille de blocage (2) puisse coulisser le long du tube extractible.

2. Dispositif réglable en hauteur selon la revendication 1, **caractérisé** en ce que
l'appendice (3) est réalisé sur le côté intérieur de la douille de blocage (2) de façon telle, que lors du soulèvement du tube extractible (4), la douille de blocage (2) tourne d'elle-même, en raison de la force de gravité, autour de l'axe de rotation (1), l'appendice (3) glissant à cette occasion hors de l'évidement (7) du tube extractible (4).

3. Dispositif réglable en hauteur selon la revendication 1 ou 2, **caractérisé** en ce que
- l'appendice (3) réalise une surface d'appui (3a) servant à l'appui du côté supérieur d'un évidement (7) dans le tube extractible (4),
- l'appendice (3) est d'une configuration en forme de coin ou de forme convexe et se rétrécit vers le bas jusqu'au bord intérieur du tube vertical fixe (5),
- l'angle formé par la surface frontale inférieure de la douille de blocage (2) et le rétrécissement de l'appendice (3) en forme de coin ou de forme convexe, est supérieur à 90°.

4. Dispositif réglable en hauteur selon la revendication 1, **caractérisé** en ce que
la surface frontale supérieure du tube vertical fixe (5) est identique ou similaire à la surface frontale inférieure de la douille de blocage (2).

5. Dispositif réglable en hauteur selon la revendication 1, **caractérisé** en ce que
les surfaces frontales supérieure et inférieure de la douille de blocage (2) sont formées par des coupes en biais.

6. Dispositif réglable en hauteur selon la revendication 1, **caractérisé** en ce que
- la ligne périphérique supérieure résultant de la surface frontale supérieure sur le tube extractible (4) présente un point le plus bas (6) qui se trouve à la même hauteur ou se trouve plus bas d'une certaine valeur, que le point le plus haut de la ligne périphérique inférieure résultant de la surface frontale inférieure sur le tube extractible (4), ou qui se trouve à la même hauteur ou se trouve plus bas d'une certaine valeur, que l'axe de rotation (1).

7. Dispositif réglable en hauteur selon la revendication 1, **caractérisé** en ce que
la douille de blocage (2) est en matière plastique ou en fonte.
